# EUROPEAN PATENT APPLICATION

(11) **EP 3 639 948 A1**
(43) Date of publication of application: **22.04.2020**
(21) Application number: 18817759.6
(22) Date of filing: 11.06.2018
(51) Int. Cl.: B21K 1/08, B21J 5/08, F16C 3/08

(54) **METHOD FOR MANUFACTURING FORGED CRANKSHAFT**

(30) Priority: 15.06.2017 JP 2017117586
(71) Applicant: Nippon Steel Corporation, Tokyo 100-8071 (JP)
(72) Inventor: TAMURA, Kenji, Tokyo 100-8071 (JP); OKUBO, Junichi, Tokyo 100-8071 (JP); YOSHIDA, Kunihiro, Tokyo 100-8071 (JP); HWANG, Sam Soo, Tokyo 100-8071 (JP); NAKANO, Ryusuke, Tokyo 100-8071 (JP); HORI, Masao, Tokyo 100-8071 (JP)
(74) Representative: Zimmermann & Partner Patentanwälte mbB
(86) International application number: PCT/JP2018/022207
(87) International publication number: WO 2018/230500

(57) **Abstract**

Disclosed method for producing a forged crankshaft includes: a clumping step of holding a first region (51a) by clumping a first region (51a) of a bar-like material (51) by a pair of first dies (10), and a decentering step of decentering a second region (51b) of the bar-like material (51) with second dies (20) while the first region (51a) being held. The second region (51b) is a pin-corresponding part which is to be the pin. The first region (51a) is a crank arm-corresponding part which is to be the crank arm. The decentering direction by the second die (20) is a direction perpendicular to each of the clumping direction by the first dies (10) and the longitudinal direction of the bar-like material (51), and is the same direction as the decentering direction of the corresponding pin. This will make it possible to improve material yield while suppressing increase in the facility cost.

## Description

### TECHNICAL FIELD

The present invention relates to a method for producing a crankshaft by hot forging.

### BACKGROUND ART

A crankshaft is essential in a reciprocating engine for an automobile, a motorcycle, an agricultural machine, a ship, or the like for deriving power by transforming reciprocating movement of a piston into rotational movement. A crankshaft can be produced either by die forging or casting. When high strength and high rigidity are required for a crankshaft, a crankshaft produced by die forging (hereinafter referred to as a forged crankshaft) is often used.

In general, a starting material for a forged crankshaft is a billet. Such a billet has a circular or rectangular cross section, and its cross sectional area is constant over the entire length. A production process of a forged crankshaft includes a preforming process, a die forging process, and a flash-trimming process. As required, a coining process is added after the flash-trimming process. Typically, the preforming process includes a roll forming and bending processes, and the die forging process includes a rough forging and finish forging processes.

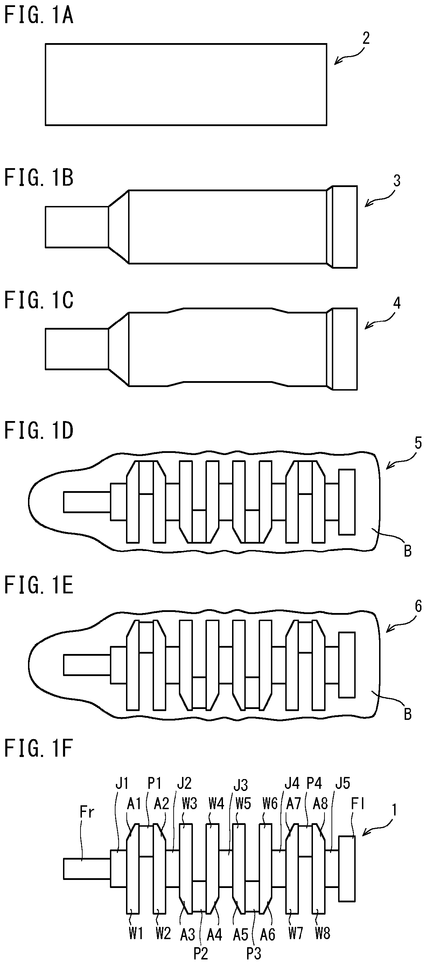

FIGS. 1A to IF are schematic diagrams to illustrate a conventional common production process of a typical forged crankshaft. FIG. 1A shows a billet, FIG. 1B shows a rolled preform, FIG. 1C shows a bent preform, FIG. 1D shows a rough forged preform, FIG. 1E shows a finish forged preform, and FIG. IF shows a crank shaft (final product). A forged crankshaft 1 illustrated in FIG. IF is to be mounted on a 4-cylinder engine. The crankshaft 1 includes five journals J1 to J5, four pins P1 to P4, a front part Fr, a flange part F1, and eight crank arms (hereinafter, simply referred to as "arms") A1 to A8. The arms A1 to A8 connect the journals J1 to J5 with the pins P1 to P4, respectively. Further, all the arms A1 to A8 integrally include counterweights W1 to W8 (hereinafter, simply referred to as "weights"), respectively.

Hereinafter, when collectively referring to the journals J1 to J5, the pins P1 to P4, the arms A1 to A8, and the weights W1 to W8, respectively, their symbols are also denoted as "J" in the journals, "P" in the pins, "A" in the arms, and "W" in the weight prats. A pin P and a set of arms A (including weights W) connecting to the pin P are collectively referred to as a "throw".

In the production method shown in FIGS. 1A to IF, the forged crankshaft 1 is produced as described below. First, a billet 2 having a predetermined length as shown in FIG. 1A is heated in a heating furnace (for example, an induction heating furnace or a gas atmosphere heating furnace, etc.) and thereafter subjected to roll forming. In the roll forming process, the billet 2 is rolled by use of, for example, a grooved roll, thereby decreasing the cross sectional area at a part in the longitudinal direction of the billet 2. As a result, the volume of the billet 2 is distributed in the longitudinal direction to obtain a rolled preform 3 which is an intermediate material (see FIG. 1B). Next, in a bending process, the rolled preform 3 is partly pressed in a direction perpendicular to the longitudinal direction, thereby decentering a part in the longitudinal direction of the rolled preform 3. As a result, the volume of the rolled preform 3 is distributed, thereby obtaining a bent preform 4 which is a further intermediate material (see FIG. 1C).

Successively, in the rough forging process, the bent preform 4 is subjected to press forging by use of a pair of dies (an upper die and a lower die), to obtain a rough forged preform 5 (see FIG. ID). The resulting rough forged preform 5 has an approximate shape of the crankshaft (final product). Further, in the finish forging process, the rough forged preform 5 is subjected to press forging by use of a vertical pair of dies, thereby obtaining a finish forged preform 6 (see FIG. IE). The resulting finish forged preform 6 has a shape corresponding to that of the crankshaft as the final product. During the rough forging and finish forging, excess material flows out from a gap between the upper and lower dies, forming flash. As a result, both of the rough forged preform 5 and the finish forged preform 6 have a pronounced flash B around its circumference.

In the flash-trimming process, for example, with the finish forged preform 6 having a flash being sandwiched between a pair of dies, the flash B is punched off by use of a tool die. As a result, the flash B is removed from the finish forged preform 6, thereby obtaining a flash-free forged preform. The flash-free forged preform has an approximately same shape as that of the forged crankshaft 1 as shown in FIG. IF.

In the coining process, principal parts of the flash-free finish forged preform are pressed slightly from upward and downward with dies so that the flash-free finish forged preform is reformed to have the same geometry as that of the final product. Here, the principal parts of the flash-free finish forged preform include, for example, shaft portions such as the journals J, the pins P, the front part Fr, and the flange part Fl, and further the arms A and the weights W. Thus, the forged crankshaft 1 is produced.

The production process shown in FIGS. 1A to IF can be applied to various crankshafts without being limited to a 4-cylinder 8-counterweight crankshaft as shown in FIG. IF. For example, it can be applied to a 4-cylinder 4-counterweight crankshaft.

In the case of a 4-cylinder 4-counterweight crankshaft, some of the arms A of the eight arms A have integrally a weight W. For example, the foremost first arm A1, the rearmost eighth arm A8, and middle two arms (the fourth arm A4, the fifth arm A5) have weights W. Moreover, the remaining arms A, specifically, the second arm A2, the third arm A3, the sixth arm A6 and the seventh arm A7 have no weight. Hereinafter, an arm having a weight is referred to as a "weighted arm", and an arm having no weight is referred to as a "weightless arm" as well.

Further, the production process is similar even for the crankshafts to be mounted on a 3-cylinder engine, a series 6-cylinder engine, a V-type 6-cylinder engine, an 8-cylinder engine, or the like. It is noted that when adjustment of layout angle of the pin is necessary, a twisting process is added after the flash-trimming process.

In the production of such a forged crankshaft, it is desirable to improve material yield by decreasing the flowing out of flash during die forging. Here, the term, material yield means a fraction (percentage) of the volume of the forged crankshaft (final product) to that of the billet. This material yield can be improved by facilitating distribution of volume in the preforming.

Techniques concerning preforming have been described in Japanese Patent Application Publication No. 2001-105087 (Patent Literature 1), Japanese Patent Application Publication No. H02-255240 (Patent Literature 2), and Japanese Patent Application Publication No. 62-244545 (Patent Literature 3).

Patent Literature 1 describes a preforming method using a pair of upper and lower dies. In the preforming method, when a bar-like workpiece is pressed by the upper and lower dies, a part of the workpiece is elongated thereby decreasing its cross sectional area, and concurrently another part in continuous with the part is moved in a sliding manner to be decentered. The preforming method described in Patent Literature 1 states that it can provide a preforming method requiring less facility cost, since it allows to perform elongation and bending at the same time.

The preforming described in Patent Literature 2 uses a 4-pass high speed rolling facility instead of conventional 2-pass roll forming. In that preforming, it is proposed to determine the cross sectional area of a rolled preform according to the distribution of cross sectional areas of the weight, the arm, and the journal of a forged crankshaft (final product). Patent Literature 2 states that this allows improvement of material yield.

In the preforming described in Patent Literature 3, volume is distributed in the axial direction and radial direction by a cross rolling method, thereby obtaining an axially nonsymmetric intermediate material. In the cross rolling method, a round-bar-like starting material is pressed with two dies, and volume is distributed by form rolling action of the dies.

### CITATION LIST

### PATENT LITERATURE

Patent Literature 1: Japanese Patent Application Publication No. 2001-105087
Patent Literature 2: Japanese Patent Application Publication No. H02-255240
Patent Literature 3: Japanese Patent Application Publication No. 62-244545
Patent Literature 4: International Application Publication No. WO2014/038183

### SUMMARY OF INVENTION

### TECHNICAL PROBLEM

In the production of a forged crankshaft, it is desired as described above to decrease flowing out of flash during die forging, thereby improving material yield.

As in the case of the production process shown in FIGS. 1A to IF, the preforming may consist of roll forming and bending. In this case, to ensure a material volume of a region which is to be a weight, a region which is to be a pin, and a region which is to be a pair of arms in continuous with the pin are pressed, to decenter those regions in a direction opposite to the decentering direction of the pin in the bending.

It is noted that hereinafter, a region which is to be a journal will be also referred to as a "journal-corresponding part", a region which is to be a pin as a "pin-corresponding part", a region which is to be an arm as an "arm-corresponding part", and a pin-corresponding part and a set of arms (including a region which is to be a weight) in continuous with the pin-corresponding part as a "throw-corresponding part".

However, in the above described method, the throw-corresponding part is decentered by bending in a direction opposite to the decentering direction of the pin. As a result, since the material volume in the position of the pin is distributed in a biased manner in a direction opposite to the decentering direction of the pin, a large amount of flash occurs around the pin in die forging. That is because the volume of the throw-corresponding part (including the pin-corresponding part) needs to be increased to prevent underfill in the pin during die forging. As a result, increase in material yield cannot be expected.

In the preforming method according to the above described Patent Literature 1, as with the above described method, the throw-corresponding part is decentered in a direction opposite to the decentering direction of the pin. For that reason, increase in material yield cannot be expected.

In the preforming method described in Patent Literature 2, since roll forming is used, it is not possible to decenter a part of the billet. As a result, the resulting rolled preform needs to be further subjected to bending, etc. In this case, as described above, increase in material yield cannot be expected.

In the preforming method described in Patent Literature 3, volume is distributed in the axial direction and the radial direction by a cross rolling method. In the cross rolling method, a special facility is used instead of a press machine which is used in bending and die forging, etc. Moreover, in the cross rolling method, it is difficult to process multiple sites concurrently, and for example, a plurality of journal-corresponding parts and a plurality of throw-corresponding parts are to be processed successively. For that reason, the dies become large sized. As a result of these, the facility cost will increase.

It is an object of the present invention to provide a method for producing a forged crankshaft, which improves material yield while suppressing increase in the facility cost.

### SOLUTION TO PROBLEM

A method for producing a forged crankshaft according to an embodiment of the present invention is a method for producing a forged crankshaft including a plurality of journals which define a rotation center, a plurality of pins which are decentered with respect to the plurality of journals, and a plurality of crank arms which each connect the plurality of journals with the plurality of pins, respectively. That production method includes a clumping step of holding the first region by clumping the first region, which is a part in the longitudinal direction of the bar-like material, with a pair of first dies, and a decentering step of decentering the second region of the bar-like material with a second die while the first region being held by the first dies. The second region is at least one pin-corresponding part of the plurality of pin-corresponding parts which are to be the plurality of pins. The first region is a plurality of arm-corresponding parts, to which the pin-corresponding part as the second region is adjacent, of a plurality of arm-corresponding parts which are to be the plurality of crank arms. The decentering direction by the second die is a direction perpendicular to each of the clumping direction by the first dies and the longitudinal direction of the bar-like material, and is the same direction as the decentering direction of the corresponding pin.

### ADVANTAGEOUS EFFECTS OF INVENTION

According to the production method of the present invention for producing a forged crankshaft, the pin-corresponding part is decentered in a decentering direction of the corresponding pin. As a result, since the material volume at the position of a pin is distributed in a biased manner in the same direction as the decentering direction of the pin in die forging, underfill in the pin is less likely to occur. Thus, it is possible to decrease the material volume of the pin-corresponding part. As a result, material yield is improved. Moreover, the production method of the present invention can be performed by using a press machine. Therefore, it is possible to suppress increase in facility cost.

### BRIEF DESCRIPTION OF DRAWINGS

[FIG. 1A] FIG. 1A is a schematic diagram to show a billet in a conventional common production process of a forged crankshaft.
[FIG. 1B] FIG. 1B is a schematic diagram to show a rolled preform in a conventional common production process of a forged crankshaft.
[FIG. 1C] FIG. 1C is a schematic diagram to show a bent preform in a conventional common production process of a forged crankshaft.
[FIG. ID] FIG. 1D is a schematic diagram to show a rough forged preform in a conventional common production process of a forged crankshaft.
[FIG. IE] FIG. 1E is a schematic diagram to show a finish forged preform in a conventional common production process of a forged crankshaft.
[FIG. IF] FIG. IF is a schematic diagram to show a crankshaft in a conventional common production process of a forged crankshaft.
[FIG. 2A] FIG. 2A is a longitudinal sectional view to show a state before clumping is started in an exemplary processing flow according to a clumping step and a decentering step.
[FIG. 2B] FIG. 2B is a longitudinal sectional view to show a state when clumping is finished in an exemplary processing flow according to a clumping step and a decentering step.
[FIG. 3A] FIG. 3A is a top view to show a state when clumping is finished in an exemplary processing flow according to a clumping step and a decentering step.
[FIG. 3B] FIG. 3B is a top view to show a state when decentering is finished in an exemplary processing flow according to a clumping step and a decentering step.
[FIG. 4A] FIG. 4A is a sectional view taken along a line IVA-IVA of FIG. 3A.
[FIG. 4B] FIG. 4B is a sectional view taken along a line IVB-IVB of FIG. 3A.
[FIG. 4C] FIG. 4C is a sectional view taken along a line IVC-IVC of FIG. 3A.
[FIG. 5A] FIG. 5A is a sectional view taken along a line VA-VA of FIG. 3B.
[FIG. 5B] FIG. 5B is a sectional view taken along a line VB-VB of FIG. 3B.
[FIG. 5C] FIG. 5C is a sectional view taken along a line VC-VC of FIG. 3B.
[FIG. 6] FIG. 6 is a top view to show the bar-like material when decentering is finished in an exemplary processing flow according to a clumping step and a decentering step.
[FIG. 7A] FIG. 7A is a cross sectional view to show a variant of first dies, showing a cross sectional shape of an end of the journal side.
[FIG. 7B] FIG. 7B is a cross sectional view to show a variant of first dies, showing a cross sectional shape of an end of the pin side.
[FIG. 8] FIG. 8 is a cross sectional view to show a variant of second dies.
[FIG. 9A] FIG. 9A is a cross sectional view to show a state before clumping is started in an exemplary configuration utilizing a wedge mechanism.
[FIG. 9B] FIG. 9B is a cross sectional view to show a state when clumping is finished in an exemplary configuration utilizing a wedge mechanism.
[FIG. 9C] FIG. 9C is a cross sectional view to show a state when a second die is operated in an exemplary configuration utilizing a wedge mechanism.

### DESCRIPTION OF EMBODIMENTS

Embodiments of the present invention will be described below. It is noted that in the following description, although embodiments of the present invention will be described with some examples, the present invention will not be limited to the examples described below.

The production method of the present embodiment is a method for producing a forged crankshaft. Such a forged crankshaft includes a plurality of journals J which define a rotational center, a plurality of pins P which are decentered with respect to the plurality of journals J, and a plurality of crank arms which connect the plurality of journals J with the plurality of pins P, respectively. The production method of the present embodiment includes a clumping step and a decentering step.

The clumping step is a step of holding a first region of a bar-like material by clumping the first region, which is a part in a longitudinal direction of the bar-like material, with a pair of first dies. The first region may be pressed by the first dies when the first region is clamped by the first dies. The next decentering step is performed while the first region has been held by the first dies.

The bar-like material to be clumped in the clumping step is a member to be the material of a forged crankshaft. For the bar-like material, a member called a billet as described above may be used.

The decentering step is a step of decentering a second region of the bar-like material with a second die while the first region is held by the first dies. Where, the second region is at least one pin-corresponding part of a plurality of pin-corresponding parts which are to be the plurality of pins. The first region is a plurality of arm-corresponding parts, to which a pin-corresponding part as the second region is adjacent, of a plurality of arm-corresponding parts which are to be the plurality of crank arms. That is, in setting the first region and the second region, at least one throw-corresponding part of a plurality of throw-corresponding parts is selected. It is supposed that the pin-corresponding part included in the selected throw-corresponding part is the second region, and a pair of arm-corresponding parts included in the throw-corresponding part are the first region. In an example, all the throw-corresponding parts are selected and it is supposed that all of the pin-corresponding prats are the second region, and all of the arm-corresponding parts are the first region.

The decentering direction by the second die (the decentering direction in the decentering step) is a direction perpendicular to each of the clumping direction by the first dies and the longitudinal direction of the bar-like material, and is the same direction as the decentering direction of the corresponding pin. In a typical example, the first dies move in the vertical direction in the clumping step, and the second die moves principally in the horizontal direction in the decentering step.

According to the production method of the present embodiment, a pin-corresponding part is decentered in a decentering direction of a corresponding pin with a pair of arm-corresponding parts adjacent to the pin-corresponding part being held. As a result, since the material volume at the position of the pin is distributed in a biased manner in the same direction as the decentering direction of the pin, underfill in the pin is less likely to occur in the die forging. In that case, there is no need of ensuring an excessive amount of material volume of the pin-corresponding part as conventionally. Therefore, it is possible to decrease the material volume of the pin-corresponding part. As a result, material yield can be increased. Moreover, the production method of the present embodiment can be carried out by using a press machine. Therefore, it is possible to suppress increase in facility cost.

If the arm-corresponding part is held by the first dies when the pin-corresponding part is decentered by the second die, it is possible to effectively decenter the pin-corresponding part alone. Further, it is possible to suppress excessive deformation of the arm-corresponding part which is adjacent to the pin-corresponding part. If the arm-corresponding part is not held by the first dies, the arm-corresponding part will be deformed randomly as the pin-corresponding part is decentered and moved by the second die.

In the production method of the present embodiment, the first region may further include a journal-corresponding part, to which an arm-corresponding part as the first region is adjacent, of the journal-corresponding parts to be the plurality of journals. That is, a set of arm-corresponding parts included in a selected throw-corresponding part, and a journal-corresponding part to which the arm-corresponding part is adjacent may be the first region. In this case, holding of the first region by the first dies will be further stabilized. Therefore, in the decentering step, it is possible to decenter the second region (pin-corresponding part) effectively.

In the production method of the present embodiment, at least one of the plurality of arms may be a weighted arm having a weight. In this case, the first region may include a weighted arm-corresponding part which is to be the weighted arm. In this case, in the clumping step, the first region may be made to project in a direction opposite to the decentering direction of the corresponding pin (decentering direction of weight) by pressing the first region (weighted arm-corresponding part) with the first dies. This is because it is possible to ensure the material volume of the weight.

Hereinafter, an exemplary production method of a forged crankshaft of the present embodiment will be described with reference to the drawings. The embodiments described below are exemplary, and at least part of the configuration of the following embodiment may be replaced by the above described configuration.

### 1. Exemplary production process

A forged crankshaft to be addressed by the production method of the present embodiment includes a journal J which acts as a rotational center, a pin P which is decentered with respect to the journal J, and an arm A which connects the journal J with the pin P. A part or all of the arms A include a weight W. The production method of the present embodiment can be applied to, for example, a 4-cylinder 8-counterweight crankshaft shown in FIG. IF. Moreover, it can also be applied to the aforementioned 4-cylinder 4-counterweight crankshaft. Besides, it can also be applied to a 3-cylinder engine, a series 6-cylinder engine, a V-type 6-cylinder engine, or an 8-cylinder engine, etc.

The method for producing a forged crankshaft of the present embodiment includes a clumping step and a decentering step. In the clumping step, a part (first region) in the longitudinal direction of a bar-like material is clumped with a pair of first dies to hold the concerned part. In the decentering step, a part (second region) in the longitudinal direction of a bar-like material is decentered by a second die while the first region is held by the first dies. The clumping step and the decentering step will be described in detail later.

The processing consisting of the clumping step and the decentering step of the present embodiment corresponds to a preforming in a prior art production process, and more specifically to a preforming consisting of roll forming and bending. Although the roll forming and bending are performed by different facilities respectively, in the production method of the present embodiment, the processing consisting of the clumping step and the decentering step cay be performed in a single press machine.

The bar-like material which is the workpiece may be, for example, a billet. Alternatively, it may be an initial preform in which the cross sectional area is decreased in a part in the longitudinal direction. The initial preform can be obtained by, for example, subjecting the billet to roll forming, etc.

After the preforming, for example, as in the production process shown in FIGS. 1D to 1F, a die forging process and a flash-trimming process can be added and as needed, a coining process can be added after the flash-trimming process. The die forging process may consist of rough forging and finish forging. It is noted that when it is necessary to adjust the layout angle of the pin, a twisting process is added after the flash-trimming process. All of these processes are performed successively as a hot processing.

Alternatively, as the post process of preforming, a process of performing processing by means of a shaping apparatus described in International Application Publication No. WO2014/038183 (Patent Literature 4) may be added. Patent Literature 4 proposes a forming apparatus for forming an intermediate material for finish forged preform from a rough material in which a rough shape of the crankshaft is formed. As the rough material, a preform obtained by the clumping step and the decentering process is used. In this case, after the process of processing with the above described forming apparatus, a finish forging process and a flash-trimming process may be added, and as needed, a coining process may be added. All of these processes are performed successively as a hot processing.

Generally, when a crankshaft for a 4-cylinder engine is produced, a twisting process is omitted. This is because the shape of a final product, including the layout angle of pins can be achieved by a finish forging process. In a crankshaft for a 4-cylinder engine, the layout angle of pins is 180°. Therefore, in the decentering step, the decentering direction by the second die (a direction in which the second region (pin-corresponding part) is decentered) perfectly coincides with the decentering direction of the corresponding pin.

In a crankshaft for a 3-cylinder engine, the layout angle of pins is 120°. When producing a crankshaft for a 3-cylinder engine, there are following two variations. The first case is one in which the shape of a final product can be achieved excepting the layout angles of pins by the finish forging process. The first and third pin-corresponding parts to be the first and third pins of the three pins (first to third pins) are set as the second region. In this case, the layout angle of the first pin and the third pin of a finish forged preform to be obtained is 180°. For that reason, in the decentering step, the decentering direction by the second die (direction to decenter the second region (pin-corresponding part)) perfectly coincides with the decentering direction in the finish forged preform of the corresponding pin. In this case, a twisting process is added to perform final adjustment of the layout angle of the first and third pins.

The second case is one in which the shape of a final product including the layout angle of pins is achieved by the finish forging process. In this case, the layout angle of pins of a finish forged preform to be obtained is 120°. For that reason, in the decentering step, the decentering direction by the second die (direction to decenter the second region (pin-corresponding part)) is substantially coincides with the decentering direction in the finish forged preform of the corresponding pins. To be strictly, the first and third pin-corresponding parts, which are to be the first and third pins, of the three pins (first to third pins) are set to be the second region. In the decentering step, the decentering direction by the second die (direction to decenter the second region (first and third pins)) is deviated by 30° from the decentering direction of the corresponding pins (first and third pins). In this case, there is no need of final adjustment of the layout angle of pins, and the twisting process is omitted.

In a crankshaft for a series 6-cylinder engine, the layout angle of pins is 120°. For that reason, when a crankshaft for a series 6-cylinder engine is produced, variations thereof will be the same as a case in which a crankshaft for a 3-cylinder engine is produced.

In the present description, "the same direction as the decentering direction of pins" regarding the decentering direction by the second die means, not only a direction which perfectly coincides with the decentering direction of pins, but also a direction which is slightly (for example, 30°) deviated from the decentering direction of pins.

### 2. Clumping step and decentering step

An exemplary processing flow according to a clumping step and a decentering step will be described with reference to the drawings. The present exemplary processing flow addresses a 4-cylinder 8-counterweight crankshaft.

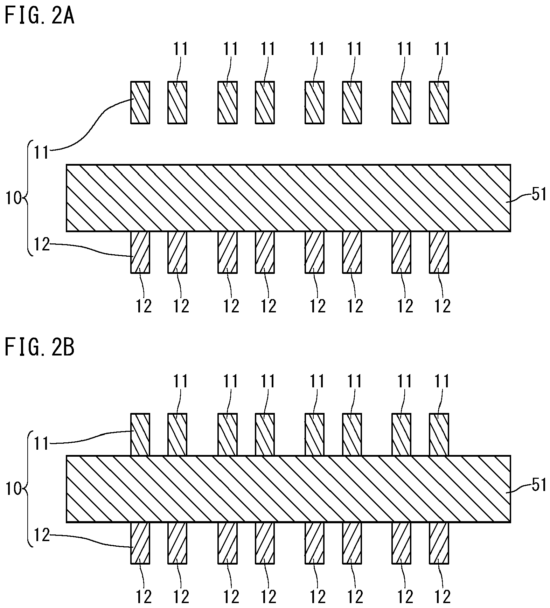

FIGS. 2A to 6 are schematic diagrams to show an exemplary processing flow according to a clumping step and a decentering step. Among those, FIGS. 2A and 2B are longitudinal sectional views in which FIG. 2A shows a state before the clumping is started, and FIG. 2B shows a state when the clumping is finished. FIGS. 2A and 2B show a bar-like material 51 (billet) and a pair of first dies 10, in which for the sake of clarity of the drawings, a second die which is to be described below is omitted.

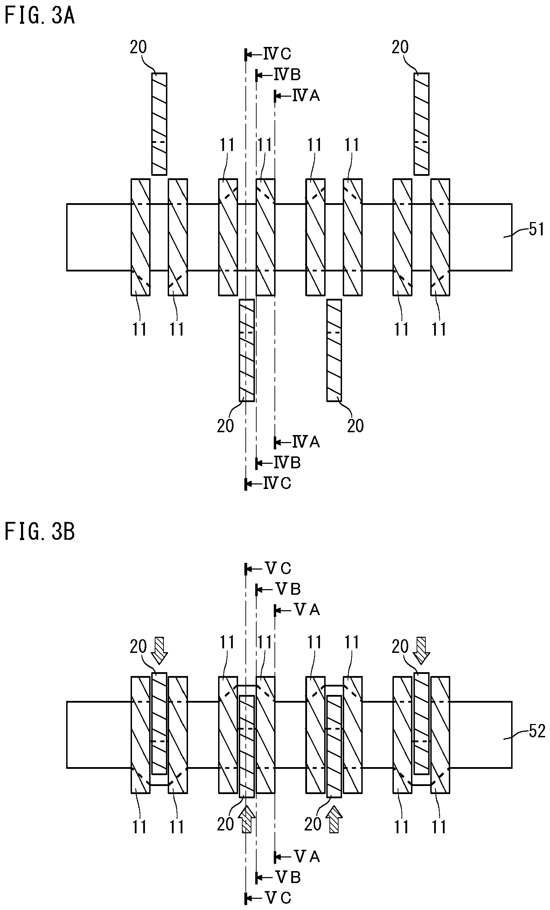

FIGS. 3A and 3B are top views, in which FIG. 3A shows a state when clumping is finished and FIG. 3B shows a state when decentering is finished. FIGS. 3A and 3B show a bar-like material 51, a preform 52, a first upper die 11 of the pair of first dies 10, and a second die 20. For the sake of clarity of the drawings, in FIGS. 3A and 3B, the first upper die 11 and the second die 20 are shaded, respectively.

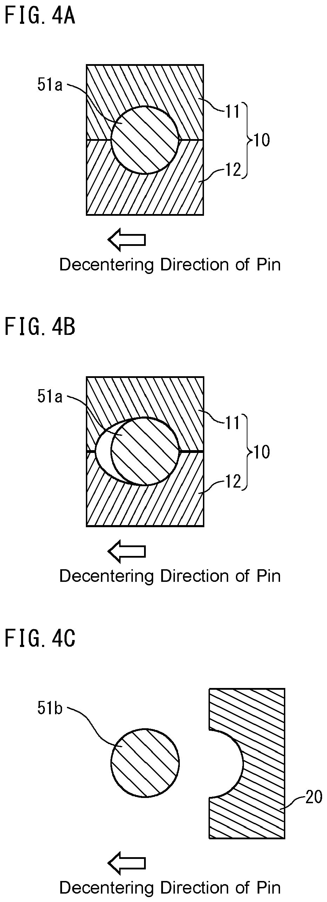

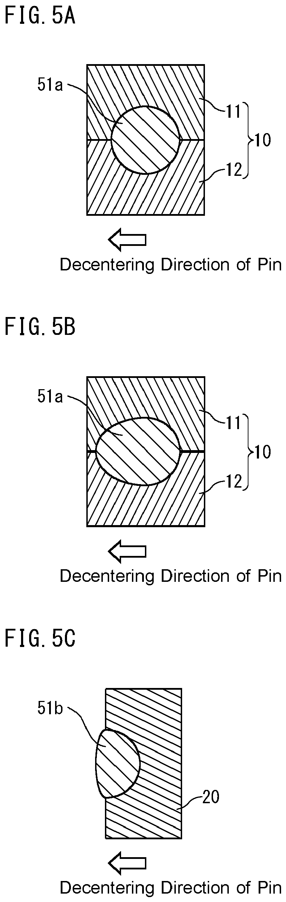

FIGS. 4A to 4C are cross sectional views to each show a sate when the clumping is finished (before the decentering is started). FIG. 4A is a sectional view taken along a line IVA-IVA of FIG. 3A; FIG. 4B is a sectional view taken along a line IVB-IVB of FIG. 3A; and FIG. 4C is a sectional view taken along a line IVC-IVC of FIG. 3A. Moreover, FIGS. 5A to 5C are cross sectional views to each show a state when decentering is finished. FIG. 5A is a sectional view taken along a line VA-VA of FIG. 3B; FIG. 5B is a sectional view taken along a line VB-VB of FIG. 3B; and FIG. 5C is a sectional view taken along a line VC-VC of FIG. 3B. FIGS. 4A and 5A each show a cross sectional shape of an end of journal side of the first dies, and FIGS. 4B and 5B each show a cross sectional shape of an end of pin side of the first dies. FIGS. 4C and 5C each show a cross sectional shape of the second die.

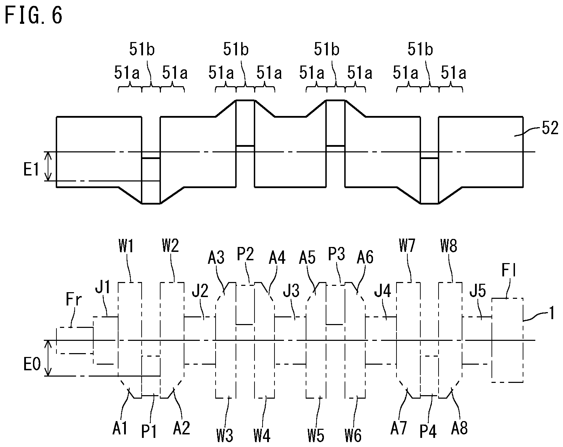

FIG. 6 is a top view to show a bar-like material (preform 52) when decentering is finished. In the lower side of FIG. 6, the shape of the forged crankshaft 1 is shown by an imaginary line to show the correspondence between each region of the preform 52 and each region of the forged crankshaft (finial product).

In the present exemplary processing flow, the pair of first dies 10 are made up of a first upper die 11 and a first lower die 12. The first upper die 11 is fixed to an upper base plate (not shown) of a press machine and the first lower die 12 is fixed to a lower base plate (not shown) of the press machine.

The first dies 10 are disposed at a position of the first region 51a of the bar-like material 51 (billet). In the present exemplary processing flow, a region (arm-corresponding part) which is to be an arm is to be the first region 51a (see FIG. 6). The first region 51a is clumped and thereby held by such pair of first dies 10.

In the present exemplary processing flow, the first dies 10 are opened in a range corresponding to a region which is to be a pin (pin-corresponding part) of a throw-corresponding part. Also, a range thereof corresponding to a region which is to be a journal (journal-corresponding part) is opened. Further, ranges thereof corresponding to a region which is to be a front part and a region which is to be a flange part are also opened.

The second die 20 is disposed in at least a part of such opened ranges. Specifically, the second die 20 is disposed at a position of the second region 51b. In the present exemplary processing flow, the pin-corresponding part of the throw-corresponding part is to be the second region 51b (see FIG. 6). The second region 51b is decentered by the second die 20. The second die 20 is movable along a direction which is perpendicular to each of the clumping direction by the first dies 10, and the longitudinal direction of the bar-like material 51, and which is the same direction as the decentering direction of the corresponding pin (see shaded arrows of FIG. 3B).

Here, the first upper die 11 and the first lower die 12 (first dies 10) each have a concave die-engraved part for clumping the above described first region 51a. The cross sectional shape of the die-engraved part is, for example, parabolic, semi-elliptic, or semi-circular. Specifically, referring to FIGS. 4A and 5A, the cross sectional shape of the die-engraved part is, for example, semi-circular at an end on the journal side of the first dies 10. This is for restricting the range, which is to be the decentering direction side of the second region 51b (pin-corresponding part), with the first dies 10, on the journal side of the first region 51a. On the other hand, referring to FIGS. 4B and 5B, the cross sectional shape of the die-engraved part is, for example, semi-elliptic at an end on the pin side of the first dies 10. This is for opening the range, which is to be the decentering direction side of the second region 51b (pin-corresponding part), from the first dies 10, on the pin side of the first region 51a. Therefore, in the die-engraved part of the first dies 10, at least the range which is to be the decentering direction side of the second region 51b (pin-corresponding part) is enlarged as its position moves from the journal side to the pin side (see the dotted lines of FIGS. 3A and 3B).

The second die 20 has a concave die-engraved part for decentering the above described second region 51b. The cross sectional shape of the die-engraved part is, for example, parabolic, semi-elliptic, or semi-circular. Specifically, referring to FIGS. 4C and 5C, the cross sectional shape of the die-engraved part of the second die 20 is, for example, semi-circular. This is for restricting the range, which is to be the opposite side to the decentering direction of the second region 51b, of the second region 51b (pin-corresponding part) with the second die 20.

The clumping step and the decentering step can be performed as follows by using the above described first dies 10 and the second die 20.

As the press machine operates, the first upper die 11 and the first lower die 12 are separated, and the bar-like material 51 having a circular cross sectional area is placed on the first lower die 12 (see FIG. 2A). At that time, the second die 20 is retreated to prevent interference with the bar-like material 51.

Next, in the clumping step, the first upper die 11 is moved down as a press machine operates. As the first upper die 11 moves down, the first upper die 11 and the first lower die 12 clump the first region 51a of the bar-like material 51. When the first upper die 11 reaches a bottom dead point, the clumping step is finished (see FIGS. 2B, 3A, and 4A to 4C). As a result, the first region 51a is held by the first dies 10 (first upper die 11 and first lower die 12). In the present processing flow, the cross sectional shape of the first region 51a remains to be circular and will not deform (see FIGS. 4A and 4B).

In the decentering step, by maintaining the position of the first upper die 11 at a bottom dead point, the first region 51a of the bar-like material 51 is interposed and held between the pair of the first dies 10. In this state, the second die 20 is moved to press against the bar-like material 51. By further moving the second die 20, the second region 51b is decentered (see FIGS. 3B and 5A to 5C). In that situation, since two first regions 51a (arm-corresponding parts) which are adjacent to one second region 51b (pin-corresponding part) at one throw-corresponding part are held by the first dies 10, it is possible to decenter the second region 51b (pin-corresponding part) with the second die 20. In this way, as shown in FIG. 6, a preform 52 in which the pin-corresponding part (second region 51b) is decentered in the decentering direction of the pin is formed.

Note that on the pin side of the first region 51a (arm-corresponding part), a range which is to be the decentering direction side of the second region 51b (pin-corresponding part) is opened from the first dies 10. For that reason, in the decentering step, the material flows from the second region 51b to the first region 51a. Therefore, the range, which is to be the decentering direction side of the second region 51b, of the first region 51a becomes smoothly continuous with the second region 51b.

After decentering, the second die 20 is retreated, and the first upper die 11 is moved upward. In this state, the preform 52 is taken out and is conveyed to the next process. That preform 52 is subjected to die forging in rough forging and finish forging, which are post processes. In this die forging, the material volume at a position of the pin (volume of the second region 51b) is distributed in a biased manner in the same direction as the decentering direction of the pin. For that reason, it becomes possible to decrease the flowing out of flash, thus improving material yield.

As described above, the operation by the pair of first dies 10 can be implemented by a press machine. The operation of the second die 20 can be implemented by for example a wedge mechanism described below, or a hydraulic cylinder, etc. For this reason, for the clumping step and the decentering step, an existing press machine can be utilized, and a special facility such as one in a cross rolling method is unnecessary. Therefore, it is possible to suppress increase in facility cost.

Moreover, as in the above described exemplary processing flow, it is possible to perform the clumping step and the decentering step within one stroke (one reciprocating motion) of the press machine. For that reason, it is possible to improve material yield while maintaining or improving production efficiency.

The first region 51a may further include a journal-corresponding part. In this case, holding of the first region 51a by the first dies is further stabilized.

Moreover, all of the arms may be weighted arms, or some of the arms may be weighted arms and the remaining arms may be weightless arms. In this case, in the clumping step, the first region (weighted arm-corresponding part) may be pressed by the first dies, thereby causing the first region to project in a direction opposite to the decentering direction of the corresponding pin (decentering direction of the weight). This will make it possible to ensure material volume at a region which is to be the weight, while suppressing the volume of the pin-corresponding part. As a result, material yield can be improved.

In the viewpoint of ensuring fillability of material into a die-engraved part for the pin in die forging, a decentering amount E1 (mm) of the pin-corresponding part of the preform 52 is preferably not less than (1.0-Dp/2/E0) to not more than 1.0 in a ratio (E1/E0) with respect to a decentering amount E0 (mm) of finish dimension (decentering amount of the pin of a forged crankshaft) (see FIG. 6). Where, Dp means a diameter of the pin in finish dimension (diameter of the pin of the forged crankshaft). From a similar viewpoint, a cross sectional area Sp1 (mm²) of the pin-corresponding part of the preform 52 is preferably not less than 0.7 to not more than 1.5 in a ratio (Sp1/Sp0) with respect to the cross sectional area Sp0 (mm²) of the pin of the forged crankshaft. The ratio (Sp1/Sp0) is more preferably not less than 0.75 to not more than 1.1.

The cross sectional shapes of the first dies 10 and the second die 20 will not be limited to the above described shapes. Variants of the first dies 10 and the second die 20 will be described with reference to the drawings.

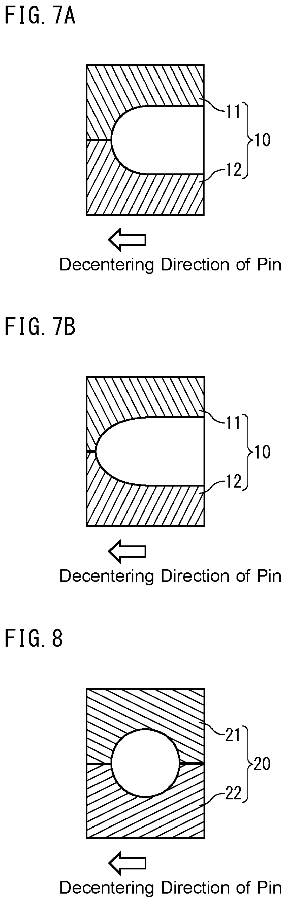

FIGS. 7A and 7B are cross sectional views to show variants of the first dies. FIG. 7A shows a cross sectional shape of an end on the journal side of the first dies, and corresponds to a sectional view taken along a line IVA-IVA of FIG. 3A. FIG. 7B shows a cross sectional shape of an end on the pin side of the first dies, and corresponds to a sectional view taken along a line IVB-IVB of FIG. 3A.

Referring to FIGS. 7A and 7B, the die-engraved parts of the first upper die 11 and the first lower die 12 (first dies 10) are opened in a range which is to be the opposite side to the decentering direction of second region 51b (pin-corresponding part). This is because there will be no effect on holding of the first region 51a in the decentering step.

FIG. 8 is a cross sectional view to show a variant of the second die. FIG. 8 shows a cross sectional shape of the second die, and corresponds to a sectional view taken along a line IVC-IVC of FIG. 3A.

Referring to FIG. 8, second dies 20 consist of a second upper die 21 and a second lower die 22. In this case, the cross sectional shapes of die-engraved parts of the second upper die 21 and the second lower die 22 (second dies 20) are, for example, semi-circular. However, a range thereof which is to be the decentering direction of the second region 51b (pin-corresponding part) may be opened. This is because there will be no effect on the decentering action of the second region 51b in the decentering step.

As described above, the operation of the second die 20 can be implemented by, for example, a wedge mechanism to be described below, or a hydraulic cylinder, etc. In view of operating the second die reliably in synchronous with the reciprocating motion of the press machine, and realizing high speed operation, it is preferable to operate the second die by a wedge mechanism. Hereinafter, an exemplary configuration in which the second die is operated by a wedge mechanism will be described with reference to the drawings.

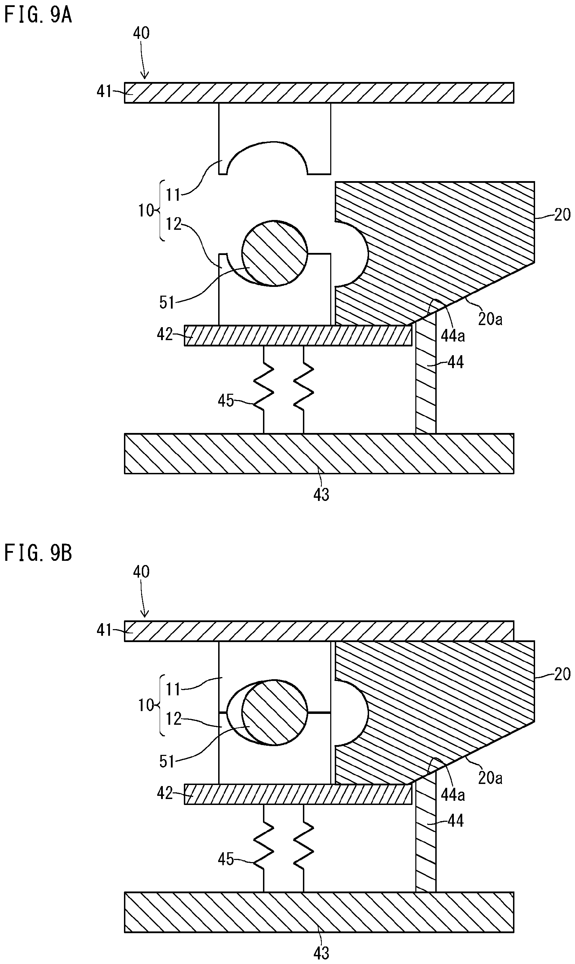

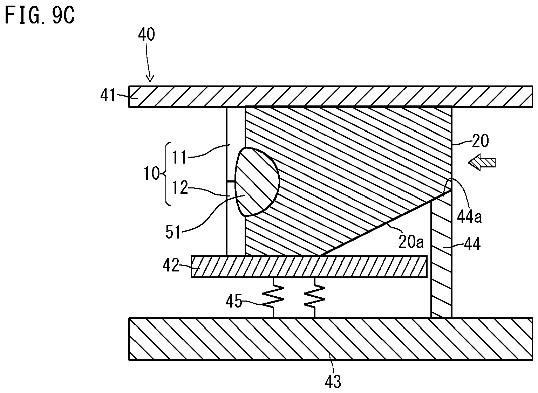

FIGS. 9A to 9C are cross sectional views to show exemplary configuration when the second die is operated by a wedge mechanism, in which FIG. 9A shows a state before clumping is started, FIG. 9B shows a state after clumping is finished, and FIG. 9C shows a sate when the second die is in operation. FIGS. 9A to 9C show a part of a press machine 40, a bar-like material 51 (billet), a pair of first dies 10, a second die 20, and a wedge 44. The press machine 40 includes a bed 43, an upper base plate 41 which reciprocally moves upward and downward, a lower base plate 42, and an elastic member 45 (for example, a spring). The lower base plate 42 is held so as to be movable upward and downward by the bed 43 via the elastic member 45.

The first upper die 11 of the first dies 10 is fixed to the upper base plate 41, and the first lower die 12 is fixed to the lower base plate 42. The second die 20 is held by the lower base plate 42 so as to be movable along a direction perpendicular to the clumping direction of the first dies (the horizontal direction in the present exemplary configuration). A part of the bottom surface of the second die 20 is an inclined surface 20a, and the height of the inclined surface 20a increases as moving away from the first dies 10. The wedge 44 extends in the up and down directions, and a lower end of the wedge 44 is fixed to the bed 43. Moreover, the upper surface of the wedge 44 is an inclined surface 44a, and the height of the inclined surface 44a increases as moving away from the first dies 10.

When such an exemplary configuration is adopted, the first upper die 11 moves down as the upper base plate 41 moves down, in the clumping step (see FIG. 9A). As a result, the bar-like material 51 is clumped by a pair of first dies 10. In this occasion, a die-parting plane of the first upper die 11 and the die-parting plane of the first lower die 12 come into abutment with each other, and further the upper base plate 41 and the second die 20 come into abutment with each other so that the clumping step is finished (see FIG. 9B).

Moving the upper base plate 41 downward after clumping will result in shrinkage of the elastic member 45 (FIG. 9C). As a result, the first upper die 11, the first lower die 12, and the second die 20 move down. In that occasion, the inclined surface 20a of the second die 20 is pressed by the inclined surface 44a of the wedge 44 so that the second die 20 is moved in the horizontal direction (see a shaded arrow of FIG. 9C). As a result, the second die 20 is pressed against the bar-like material 51, thereby decentering a part of the bar-like material 51. Adopting a wedge mechanism in this way allows the second die 20 to operate as the upper base plate 41 moves reciprocally.

In the exemplary processing flow and the exemplary configuration utilizing the wedge mechanism described above, decentering by the second die 20 is started when the clumping by a pair of the first dies 10 is finished. In the production method of a forged crankshaft of the present embodiment, the decentering by the second die 20 may be started at any time if it is after the clumping by a pair of the first dies 10 has been finished.

### INDUSTRIAL APPLICABILITY

The present invention can be effectively used for producing a forged crankshaft to be mounted on a reciprocating engine.

### REFERENCE SIGNS LIST

1: Forged crankshaft,
10: First dies,
11: First upper die,
12: First lower die,
20: Second dies,
20a: Inclined surface,
40: Press machine,
41: Upper base plate,
42: Lower base plate,
43: Bed,
44: Wedge,
44a: Inclined surface,
45: Elastic member,
51: Bar-like material,
51a: First region (arm-corresponding part),
51b: Second region (pin-corresponding part),
52: Preform,
A, A1 to A8: Crank arms,
B: Flash,
J, J1 to J5: Journals,
P, P1 to P4: Pins,
Fr: Front part,
Fl: Flange part, and
W, W1 to W8: Counterweights.

## Claims

1. A method for producing a forged crankshaft including a plurality of journals which define a rotation center, a plurality of pins which are decentered with respect to the plurality of journals, and a plurality of crank arms which connect the plurality of journals with the plurality of pins, respectively, wherein
the production method comprises:
a clumping step of holding a first region by clumping the first region, which is a part in the longitudinal direction of the bar-like material, with a pair of first dies, and
a decentering step of decentering a second region of the bar-like material with a second die while the first region being held by the first dies, and wherein
the second region is at least one pin-corresponding part of a plurality of pin-corresponding parts which are to be the plurality of pins,
the first region is a plurality of arm-corresponding parts, to which the pin-corresponding part as the second region is adjacent, of a plurality of arm-corresponding parts which are to be the plurality of crank arms, and
the decentering direction by the second die is a direction perpendicular to each of the clumping direction by the first dies and the longitudinal direction of the bar-like material, and is the same direction as the decentering direction of the corresponding pin.

2. The method for producing a forged crankshaft according to claim 1, wherein
the first region further includes a journal-corresponding part, to which the arm-corresponding part as the first region is adjacent, of journal-corresponding parts which are to be the plurality of journals.

3. The method for producing a forged crankshaft according to claim 1 or 2, wherein
at least one of the plurality of crank arms is a weighted arm having a counterweight, and
the first region includes a weighted arm-corresponding part which is to be the weighted arm.
